# EUROPÄISCHE PATENTSCHRIFT

(11) **EP 2 798 205 B1**
(45) Veröffentlichungstag und Bekanntmachung des Hinweises auf die Patenterteilung: **08.04.2015**
(21) Anmeldenummer: 12812276.9
(22) Anmeldetag: 27.12.2012
(51) Int. Cl.: F03D 7/06, F03B 17/06, F03D 3/06

(54) **STRÖMUNGSMASCHINE**
TURBOMACHINE
TURBOMACHINE

(30) Priorität: 29.12.2011 AT 19042011
(43) Veröffentlichungstag der Anmeldung: 05.11.2014
(73) Patentinhaber: T-Wind GmbH, 1010 Wien (AT)
(72) Erfinder: SCHWAIGER, Meinhard, A-4040 Linz (AT)
(74) Vertreter: Babeluk, Michael
(86) Internationale Anmeldenummer: PCT/EP2012/076954
(87) Internationale Veröffentlichungsnummer: WO 2013/098326

(56) Entgegenhaltungen:
- DE-A1- 19 544 400
- DE-C- 391 968
- DE-U1-202009 002 552
- US-B1- 6 379 115

## Beschreibung

Die gegenständliche Erfindung bezieht sich auf eine alternative Vorrichtung zur Nutzung der Wind- bzw. Wasserenergie auf Basis eines Cyclogyro-Rotors, vorzugsweise ausgeführt als Kleinkraftanlage, mit erhöhtem Wirkungsgrad und erweitertem Einsatzspektrum.

Konkret betrifft die Erfindung eine Strömungsmaschine, mit einem im Wesentlichen zylindrischen Rotor mit einem Rotorkörper und einer Drehachse, wobei der Rotor dazu ausgebildet ist, in einer Richtung senkrecht zur Drehachse durchströmt zu werden, mit mehreren parallel zu der Drehachse im Rotorkörper angeordneten Rotorblättern und mit einer Verstelleinrichtung zur zyklischen Verstellung der Rotorblätter

Die Energiegewinnung aus erneuerbaren Energiequellen gewinnt zunehmend weltweit an Bedeutung. Für Windkraftanlagen sind Konzepte mit horizontaler Drehachse oder vertikaler Drehachse bekannt, ausgeführt als Windräder oder als Vertikalachsenrotore (Darrieus-Rotor). Die Flügelprofile sind überwiegend als Auftriebsprofile ausgeführt. Windkraftanlagen werden entweder als Großanlagen in Windparks errichtet, wozu neben den hohen Errichtungskosten hohe Aufwendungen in die Stromnetzinfrastruktur erforderlich sind, oder als dezentrale Kleinanlagen, deren Errichtungskosten und Aufwendungen für die Infrastruktur - relativ gesehen - geringer ausfallen. Wind als Energiequelle steht in Europa ca. 4.000 h pro Jahr zur Verfügung wobei sich die Windgeschwindigkeit über ein weites Spektrum erstreckt, das näherungsweise durch eine Weibullverteilung beschrieben werden kann, mit einer maximalen Häufigkeit im Bereich von ca. 2 bis 8 m/sec.. Unterhalb einer kritischen Windgeschwindigkeit (Anlauf- oder Kopplungsgeschwindigkeit) bleiben Windkraftanlagen aufgrund zu geringer Energieausbeute abgeschaltet. Die Energiegewinnung aus Sonnenenergie ist in Europa durchschnittlich an ca. 1.700 h pro Jahr möglich, weshalb die jährliche Gesamtenergieausbeute bei Photovoltaikanlagen bescheiden ausfällt. Nachteilig wirken sich für den Betrieb üblicher Windkraftanlagen die ungünstige Häufigkeitsverteilung der Windgeschwindigkeit, die uneinheitlichen Windrichtungen und bei Photovoltaikanlagen die vergleichsweise geringe Anzahl an ausnutzbaren Sonnenstunden aus.

Es sind verschiedentlich Anstrengungen unternommen worden, die Energieausbeute bei Windkraftanlagen zu verbessern. Dazu zählen beispielsweise die Optimierung der Flügelgeometrie mittels Winglets bei Windrädern, deren Wirkungsgraderhöhung jedoch nur bei wenigen % liegt, die Integration von Kleinwindkraftanlagen in Dachkonstruktionen oder strömungstechnische Vorrichtungen zur Windverstärkung.

Aus der DE 2914957 A1 (R. H. Illig, 1979) ist eine Horizontalwindkraftanlage bekannt, deren Rotor mit festen Flügelelementen ausgeführt und vollständig in einem Gehäuse gekapselt ist, welches ein Klappensystem aufweist das eine Anströmung der Rotorflügel jeweils einer Rotorhälfte erlaubt. Damit kann die Anströmung des Rotors aus nur zwei bevorzugten Windrichtungen erfolgen. Die Einhausung ist als separates quaderförmiges Gehäuse oder der Dachform folgend in den First integriert.

Aus der AT 393.299 B (M. Rettenbacher, 1985) ist eine Windkraftanlage bekannt, die quer zur Drehachse durchströmt wird und mit flexiblen Segelflächen ausgeführt ist. Die Segelfläche ist an einer Seite fest verankert und auf der zweiten Seite mit einem Querholm im Rotor, der eine Kreisbewegung mit dem Radius R ausführt verbunden. Während einer Rotorumdrehung wird die Segelfläche dabei einmal nahezu gespannt (der Querholm befindet sich gegenüber der festen Segelflächenverankerung) bzw. schlaufenförmig im Wind gewölbt. Drei Einheiten sind um den Teilungswinkel von 120° versetzt entlang einer gemeinsamen Drehachse aneinandergereiht. Der Wirkungsgrad der Anlage ist eher bescheiden.

Aus der DE 19644890 A (R. Huber, 1998) ist eine horizontale in die Giebelkonstruktion eines Daches integrierte Windkraftanlage mit einer Windleiteinrichtung bekannt, dessen Rotor mit starren ebenflächigen radialen Rotorflügeln ausgeführt ist und in die Ausnehmung des Dachgiebels derart integriert ist, dass nur der obere Teil des "Walzenrotors" vom Wind angeströmt werden kann. Das Abdeckungselement dient als Windleiteinrichtung sowie als Schnee- und Regenschutz.

Aus der DE 10054815 A (J. Kramer, 2000) ist eine Windkraftanlage für Dächer zur Energiegewinnung bekannt, wobei das Windrad, ausgeführt als Querstromlüfter, und der Generator integraler Bestandteil einer Firstabdeckung sind. Diese Firstabdeckung besteht aus beweglichen Windleitblechen.

Aus der EP 1 422 422 A2 (Takahashi, 2002) ist eine Windkraftanlage auf Basis eines Darrieus-Rotors bekannt, dessen starre Rotorblätter mit einem Flügelprofil ausgeführt sind, die taschenförmig ausgeführt und einseitig offen sind, zur Erhöhung der Windausbeute bei geringen Windgeschwindigkeiten.

Aus der GB 2396888 A (Mackinnon Calum, 2004) ist eine Wind- bzw. Wasserturbine bekannt, die quer zur Rotorachse mit Luft oder Wasser durchströmt wird und mit ebenflächigen radialen Rotorblättern ausgeführt ist. Über eine spezielle Strömungsleiteinrichtung wird das Medium Luft oder Wasser auf eine Rotorhälfte geleitet, sodass der Rotor in Rotation versetzt werden kann. Das Strömungsmedium wird teilweise vom rücklaufenden Rotorblatt wieder gegen die Strömungsrichtung zurück gefördert. Der Wirkungsgrad bleibt dabei sehr gering.

Aus der GB 2440946 B (P. P. Robertson, 2006) ist eine Vertikalachsenwindkraftanlage bekannt, die auf einem Hausdach montiert wird, die mit einer speziellen Strömungsleiteinrichtung die einströmende Luft zu der darunterliegenden Vertikalachsenturbine leitet und mit einem Klappenventil zur Luftmengenregulierung versehen ist, um die Drehzahl über einen weiten Windgeschwindigkeitsbereich konstant halten zu können.

Aus der WO 2008/127751 A(O. Akcasu, 2008) ist eine hocheffiziente Turbine zur Wind- bzw. Wasserenergienutzung bekannt, ausgeführt als Cyclogyro-Rotor mit aerodynamisch geformten Rotorblättern, die um eine Schwenkachse parallel zur Drehachse des Rotors computergesteuert geschwenkt werden können. Damit wird der Anstellwinkel des Rotorblattes während einer vollen Umdrehung des Rotors permanent optimiert in die Strömungsrichtung der Windströmung bzw. der Wasserströmung ausgerichtet.

Aus der US 2009/102197 A1 (T. Alabarte, 2008) ist eine horizontale Windkraftanlage mit starrer Flügelgeometrie bekannt, die mit einer speziellen Windleiteinrichtung versehen ist, um die wirksame Strömungsgeschwindigkeit der Windströmung auf eine gleichmäßigere Rotordrehzahl beeinflussen zu können. Darüber hinaus sind die Windleiteinrichtungen als ebenflächige Photovoltaik-Paneele ausgebildet.

Aus der US 2010/0013233 A (B. A. Buhtz, 2008) ist eine weitere vertikale Windturbine mit festen Rotorblättern bekannt, die für geringe Windgeschwindigkeiten vorgesehen ist und über keine Azimut-Verstelleinrichtung verfügt.

Aus der DE 202008014689 U1 (J. Törber, 2008) ist eine Horizontalwindkraftanlage mit fester Flügelgeometrie bekannt, die in den Dachfirst von Häusern integriert ist, deren obere Hälfte vollständig gekapselt ist und zwei Generatoren zur Stromerzeugung aufweist.

Aus der WO 2010/107289 A (M. S. Lee, 2009) ist eine vertikale Windkraftanlage mit halbschalenförmigen starren Rotorblättern, die als Verdrängerläufer ausgeführt und auf einer Scheibe angeordnet sind, bekannt.

Aus der GB 2470501 A (Fu-Chang Liao, 2010) ist eine horizontale Windkraftanlage mit ebenflächigen Rotorblättern (Verdrängerläufer) bekannt, die mit einer speziellen Leiteinrichtung zur Fokussierung der Windströmung auf nur eine Rotorhälfte und mit einer Drehvorrichtung zur Nachführung der Windkraftanlage in die Windrichtung (Azimutverstellung), ausgeführt ist.

Aus der DE 102010015673 A (W. Odenwald, 2011) ist eine Vorrichtung zur Nutzung der Windenergiebekannt, die in den Dachfirst eines Hauses integriert und mit einer Vielzahl starrer Flügel ausgeführt ist, die am Umfang eines Zylinders angeordnet sind. Ein Teil des Umfanges ist dabei von der Dachkonstruktion verdeckt, so dass etwa die Hälfte des Rotorquerschnittes für die Anströmung der Luft zugänglich ist. Ein Teil der Luftströmung wird gegen die Windrichtung zurückgefördert.

Die US 6,379,115 B offenbart eine Strömungsmaschine mit den Merkmalen des Oberbegriffs von Patentanspruch 1.

Nachteilig wirken sich bei diesen bekannten Konzepten der verhältnismäßig geringe Wirkungsgrad und die vergleichsweise hohe erforderliche Kopplungsgeschwindigkeit, bei der die Windkraftanlage bzw. Wasserkraftanlage selbständig in Rotation versetzt wird, aus.

Aufgabe der vorliegenden Erfindung ist es, mit einer neuartigen Turbinenkonstruktion den Bereich der ausnutzbaren Strömungsgeschwindigkeiten wesentlich zu erweitern, den Wirkungsgrad bei niedrigen Strömungsgeschwindigkeiten zu erhöhen und insgesamt die Energieausbeute zu steigern.

Erfindungsgemäß wird diese Aufgabe mit einer Vorrichtung der eingangs erwähnten Art durch die Merkmale des kennzeichnenden Teils von Patentanspruch 1 gelöst. dabei ist insbesondere vorgesehen, dass die Rotorblätter aus zwei um eine zur Drehachse parallele Schwenkachse verschwenkbaren Abschnitten bestehen. Dies bedeutet, dass zur Energieerzeugung aus einer Luft- bzw. Wasserströmung ein spezieller Rotor, nach dem Prinzip eines Cyclogyro-Rotors verwendet wird, dessen Rotorblätter in Abhängigkeit von der Anströmungsgeschwindigkeit zwei unterschiedliche Flügelformen aufweisen können. In einem Cyclogyro-Rotor sind die Rotorblätter entlang einer Drehachse um einen zyklischen Anstellwinkel schwenkbar angeordnet. Dieser Schwenkwinkel beträgt in der Regel bis zu +/-45°, vorzugsweise bis zu +/- 35°. Während einer vollen Umdrehung von 360° des Rotors um die Rotorachse werden die Rotorblätter zyklisch um den Schwenkwinkel vom negativen bis zum positiven Maximalwert bewegt, wobei zweimal ein neutraler Schwenkwinkel und je einmal ein maximaler positiver und maximaler negativer Schwenkwinkel vorliegt. Über eine integrierte Offsetansteuerung wird beeinflusst, in welcher Drehposition zur Strömungsrichtung ein neutraler Schwenkwinkel oder ein max. negativer oder positiver Schwenkwinkel vorliegt. Eine maximale Energieausbeute kann dann gewonnen werden, wenn die neutralen Schwenkwinkel möglichst parallel zur Strömungsrichtung und die max. negativen bzw. positiven Schwenkwinkel optimal in die Strömung ausgerichtet sind. Aus der Überlagerung der Umfangsgeschwindigkeit und der Anströmungsgeschwindigkeit des Strömungsmediums ergibt sich ein komplexes lokales Strömungsverhältnis und aus dem Schwenkwinkel wird ein aerodynamischer Anströmwinkel, der dem Rotorblatt eine aerodynamische Auftriebskraft verleiht und über den Abstandsradius zur Rotordrehachse wird ein Drehmoment erzeugt, das den Rotor in Rotation versetzt. Während einer vollständigen Umdrehung des Rotors sind die lokalen Strömungsverhältnisse um das Rotorblatt bei jedem Drehwinkel zwar unterschiedlich, erzeugen aber bei einer Rotorblattanzahl von 6 Stk. einen nahezu gleichmäßigen Drehmomentverlauf: Derartige Rotoren beginnen ab einer bestimmten Strömungsgeschwindigkeit, die als Kopplungs- bzw. Anlaufgeschwindigkeit bezeichnet wird, zu rotieren.

Um diese minimal erforderliche Strömungsgeschwindigkeit zu verringern und die Energieausbeute bei niedrigen Strömungsgeschwindigkeiten zu erhöhen wird in einer ersten bevorzugten Ausführungsvariante vorgeschlagen, die Rotorblätter als "morphing wing" auszubilden. Das Rotorblatt ist vorzugsweise ein vollsymmetrisches Profil, das entlang der Symmetrieachse von der Hinterkante zur Profilnase hin aufgeklappt werden kann. Dabei entstehen zwei Profilhalbkörper, die bei entsprechender Anströmung einen hohen Strömungswiderstand erzeugen. Das zurücklaufende Rotorblatt wird geschlossen und bietet dabei nur einen sehr geringen Strömungswiderstand. Auf diese Weise wird das in Strömungsrichtung sich bewegende Rotorblatt aufgeklappt und erzeugt einen hohen Strömungswiderstand, und das gegen die Strömungsrichtung zurücklaufende Rotorblatt wird geschlossen und bietet nur einen sehr geringen Strömungswiderstand. Das Rotorblatt wird auf diese Weise zu einem Widerstandsläufer bei geringen bis mittleren Strömungsgeschwindigkeiten. Bei höheren Strömungsgeschwindigkeiten bleiben die Rotorblätter geschlossen und der Rotor wird zu einem Auftriebsläufer.

Vorzugsweise liegen die verschwenkbaren Abschnitte einer ersten Stellung kompakt aneinander und bilden das oben beschriebene Flügelprofil. In einer zweiten Stellung sind die beiden Abschnitte aufgeklappt, so dass der Querschnitt, der gegenüber der Strömung exponiert ist, vervielfacht ist. Die beiden Abschnitte bilden dabei eine Schaufel in der Art einer zweidimensionalen Pelltonschaufel, d.h., dass der Querschnitt etwa einem Abschnitt einer Kardioide entspricht. Dies optimiert das Anströmverhalten im Verdrängungsbetrieb. Der Schwenkwinkel der beiden Abschnitte aus der kompakten Stellung in die schaufelartig ausgebildete Stellung beträgt typischerweise zwischen 135° und 180°, sollte jedoch mindestens 90° betragen. Vorzugsweise teilt sich dieser Schwenkwinkel dabei auf die beiden Abschnitte etwa gleichmäßig auf.

Der erfindungsgemäße Strömungsmaschine ist in vorteilhafter Weise als Teil eines Wasserkraftwerks darstellbar, bei dem der Rotor freiliegend am Boden eines strömenden Gewässers angeordnet ist. Um den Rotor ist allenfalls ein Gitter vorgesehen, das Beschädigungen durch Kollission mit Schwemmgut verhindert. Es ist allerdings auch möglich den Rotor zumindest teilweise nach obenhin abzudecken.

Andererseits kann die Strömungsmaschine aber auch als Teil eines Windkraftwerks ausgebildet sein, wobei vorzugsweise die Anordnung auf einem Gebäudedach vorgesehen ist. Um die Anströmgeschwindigkeit zu erhöhen kann besonders bevorzugt stromaufwärts des Rotors ein Anströmtrichter und stromabwärts des Rotors ein Diffusor vorgesehen sein.

In einer bevorzugten Ausführungsvariante wird zur Erhöhung der Energieausbeute vorgeschlagen, die Anströmungsgeschwindigkeit im Rotorzulauf mittels einer Strömungsleitvorrichtung zu erhöhen. Aus physikalischen Gründen steigt die Energieausbeute von umströmten Rotoren zur dritten Potenz der Anströmungsgeschwindigkeit. Bei kleinen Windkraftanlagen bietet sich die Integration der Windkraftanlage in die Dachkonstruktion eines Gebäudes, z. B. in den Dachgiebel, an. Die geneigte Dachfläche und die Gebäudewand eines durchschnittlichen Einfamilienhauses können die Strömungsgeschwindigkeit der Luftströmung in Abhängigkeit von den geometrischen Verhältnissen etwa um den Faktor 1,25 bis 2 erhöhen, wodurch sich eine Erhöhung der Energieausbeute um den Faktor 1,95 bis 8 ergibt. Eine Anordnung der Windkraftanlage auf Hochbauten, vorzugsweise im Bereich der Dachkanten von Hochbauten oder auf Flachdächern von Hoch- bzw. größeren Gewerbebauten ermöglicht ebenfalls signifikante Beschleunigungen der Strömungsgeschwindigkeit und einer Erhöhung der Energieausbeute derartiger Windkraftanlagen.

Weitere Vorteile gegenüber konventionellen Horizontal-Windkraftanlagen resultieren aus den kompakten Abmessungen, der integrierten Schutzeinhausung der rotierenden Teile, dem niedrigeren Geräuschpegel und der Vermeidung des "wandernden Schattens" der bewegten konventionellen Rotorflügel.

Bei kleinen Wasserkraftanlagen gemäß der erfindungsgemäßen Rotorkonzeption wird die Energieausbeute bei geringen Strömungsgeschwindigkeiten, wie diese z. B. in Fließgewässern ohne Aufstau vorherrschen, einerseits durch den Einsatz von Rotorblättern mit einem "morphing wing" Design, erreicht und andererseits durch eine gezielte Erhöhung der örtlichen Anströmungsgeschwindigkeit mittels einer strömungstechnisch ausgebildeten Vorrichtung. Diese besteht vorzugsweise aus einem trichterförmig sich verengenden Zulaufbereich, der eine Erhöhung der Strömungsgeschwindigkeit bewirkt, und einem sich rasch verbreiternden Auslaufbereich, der eine Druckverringerung im Massestromes am Austritt aus dem Rotor bewirkt.

Weiters betrifft die Erfindung ein Verfahren zum Betrieb einer Strömungsmaschine der oben beschriebenen Art. Ein solches Verfahren sieht vor, dass ein Rotor quer zu seiner Drehachse angeströmt wird, wobei die Rotorblätter während der Drehung zyklisch verstellt werden. Insbesondere soll diese Verstellung zumindest teilweise durch zyklisches Auf/ und Zuklappen von zwei die Rotorblätter bildenden Abschnitten erfolgen.

Dieses Verfahren kann in zwei unterschiedlichen Ausführungsvarianten ausgeführt werden. In einer ersten bevorzugten Ausführungsvariante dieses Verfahrens wird je nach Strömungsgeschwindigkeit zwischen zwei Betriebsmodi umgeschaltet. Bei geringer Anströmgeschwindigkeit erfolgt das zyklische Auf/ und Zuklappen der die Rotorblätter bildenden Abschnitte. Bei höheren Strömungsgeschwindigkeiten wird in einem zweiten Betriebsmodus die zyklische Verstellung der Rotorblätter durch eine Schwenkbewegung bei der jedoch das Profil als solches erhalten bleibt. Es ist aber auch möglich, die Verstellung fliehkraftgesteuert in Abhängigkeit von der Rotordrehzahl durchzuführen.

In einer alternativen Ausführung des Verfahrens kann eine Schwenkbewegung der Rotorblätter gleichzeitig mit dem Auf-/ und Zuklappen ausgeführt werden.

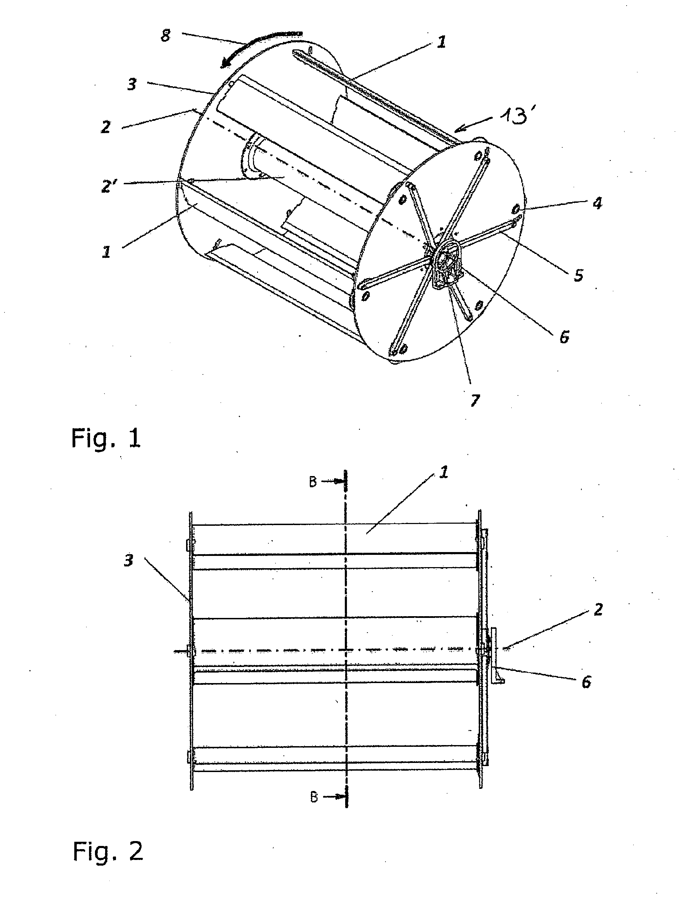

In der Folge wird die Erfindung anhand der in den Fig. 1 bis Fig. 18 dargestellten Ausführungsvarianten näher beschrieben:

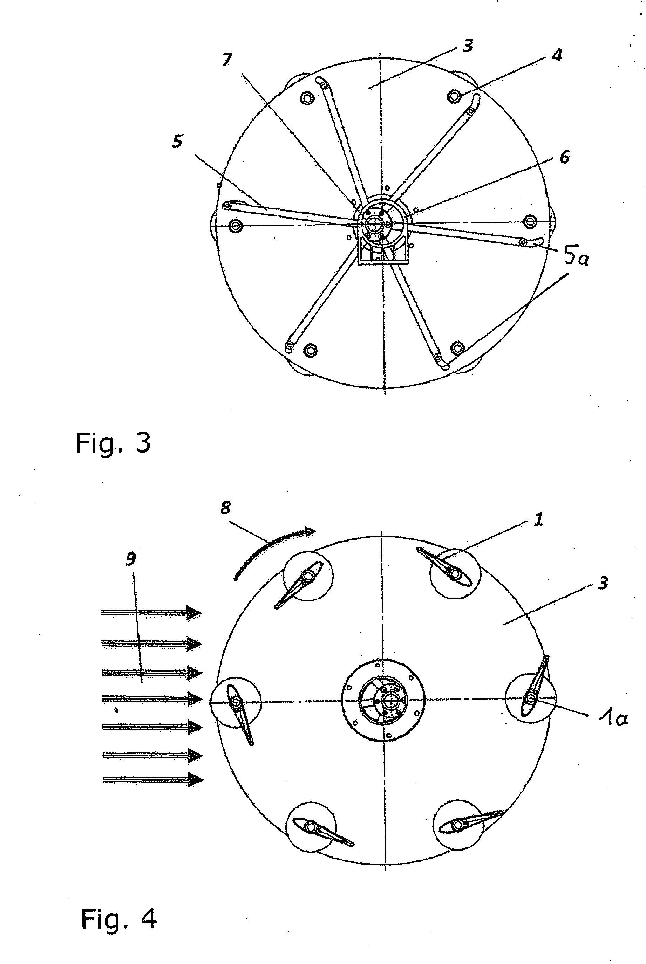

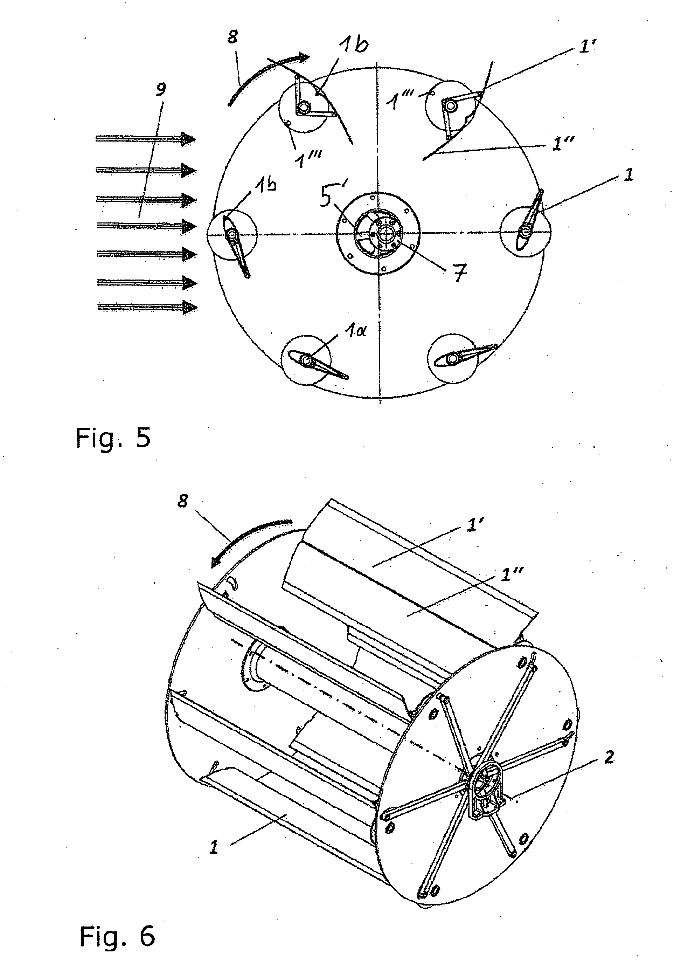

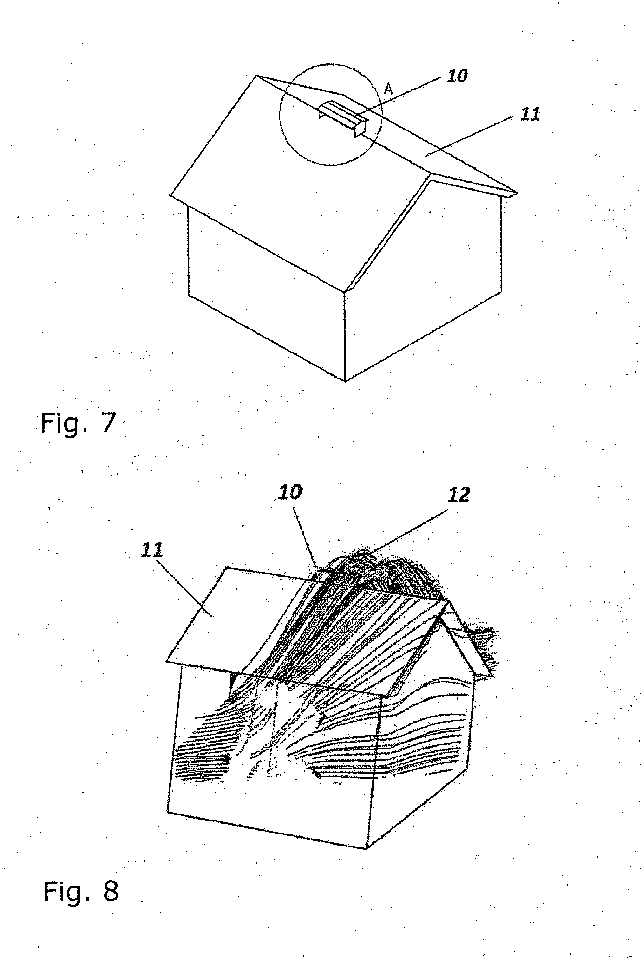

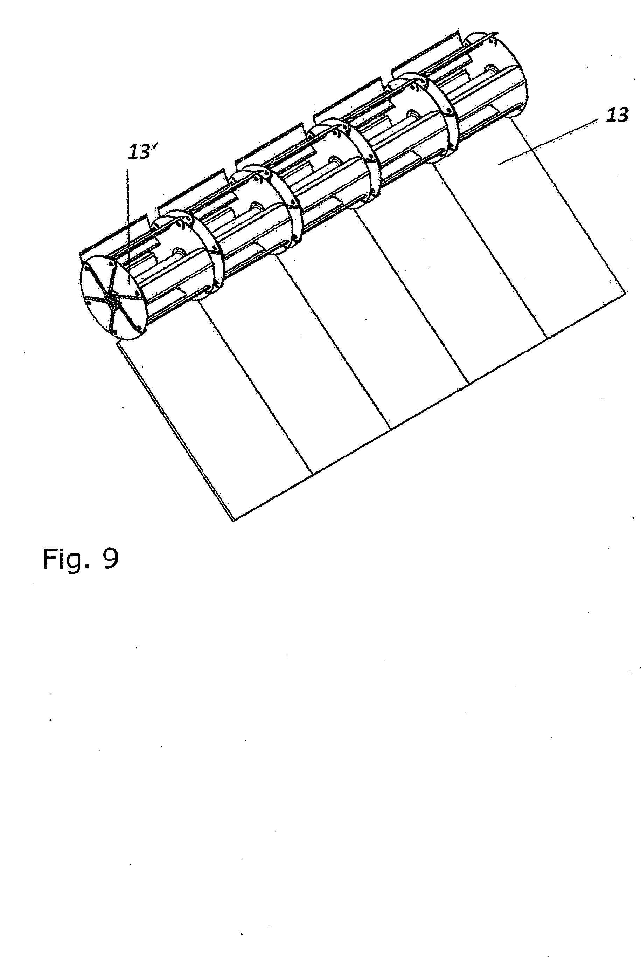

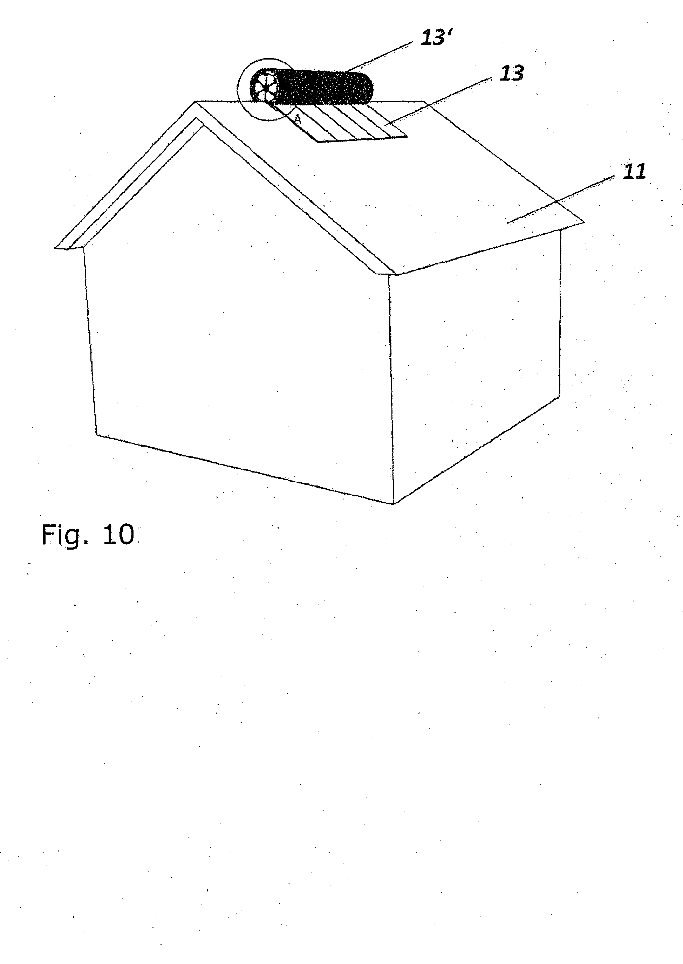

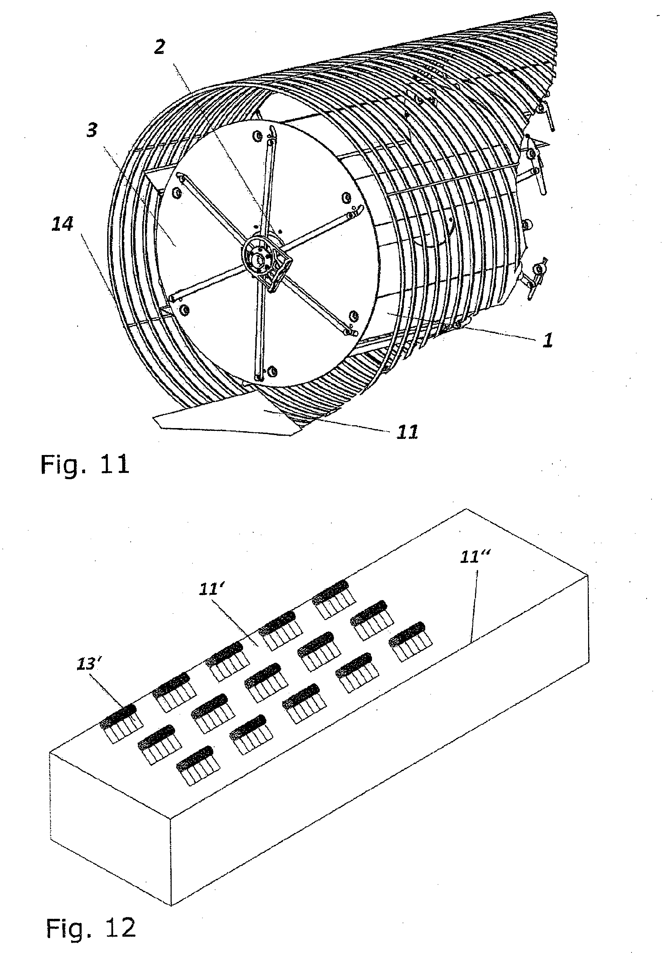

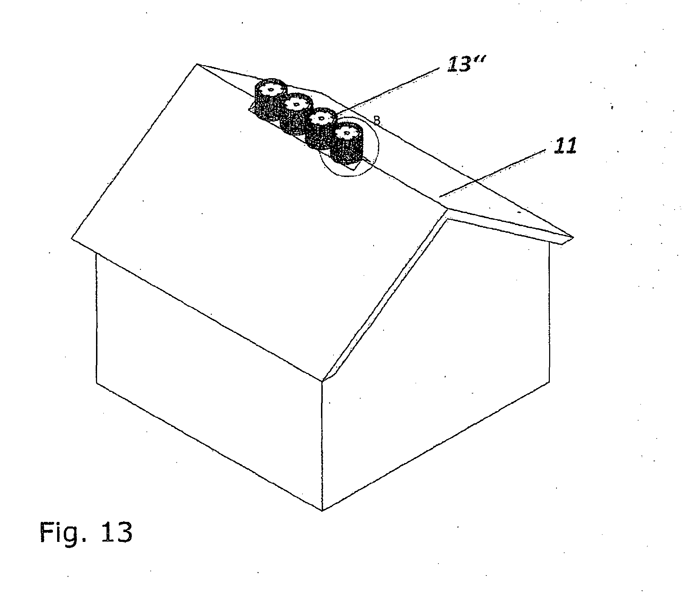

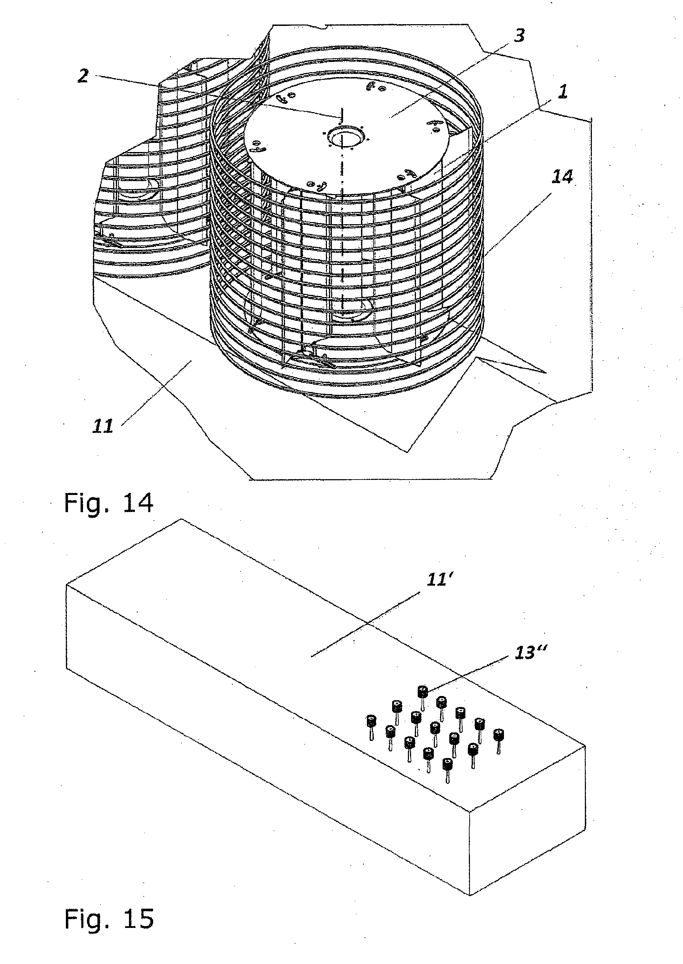

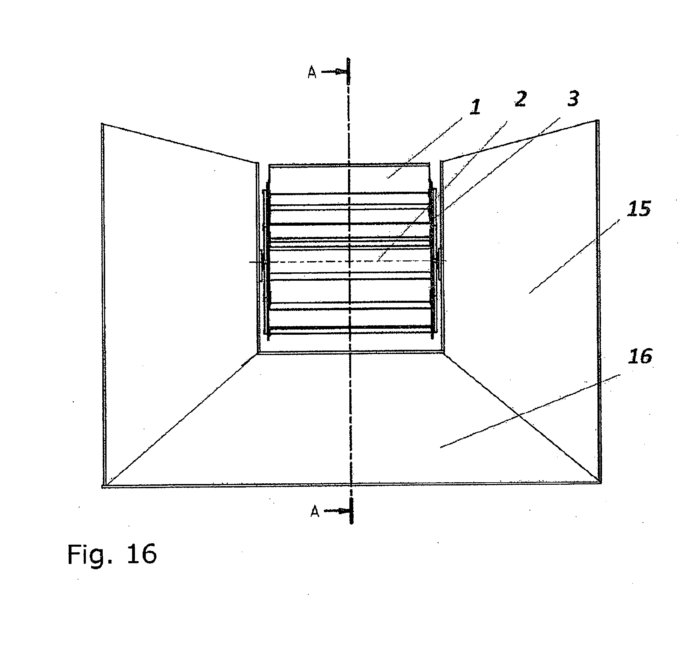

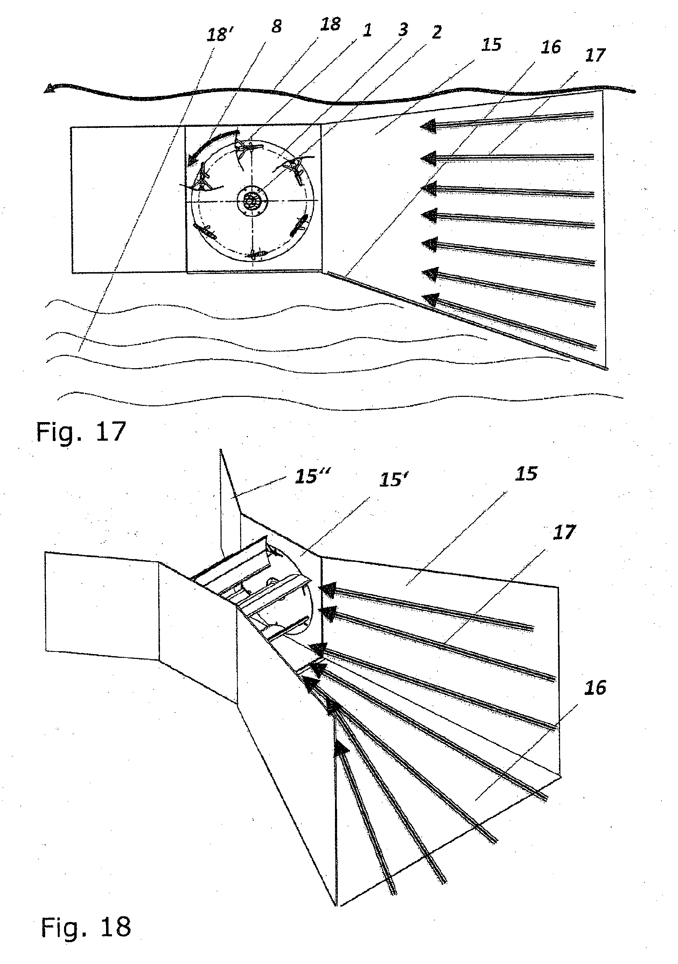

Fig. 1 zeigt einen Cyclogyro-Rotor der gegenständlichen Art in einer isometrischen Ansicht, Fig. 2 und Fig. 3 zeigen den Cyclogyro-Rotor in Ansicht und Seitenansicht, Fig. 4 zeigt den Cyclogyro-Rotor mit geschlossenen Flügelprofilen in einer Schnittdarstellung entlang der Linie B - B in Fig. 2 mit Darstellung der Windrichtung und der Drehrichtung des Rotors, Fig. 5 zeigt den Cyclogyro-Rotor mit geöffneten Flügelprofilen in einem Quadranten in einer Schnittdarstellung mit Darstellung der Windrichtung und der Drehrichtung des Rotors, Fig. 6 zeigt den Cyclogyro-Rotor mit geöffneten Flügelprofilen in einem Quadranten in isometrischer Darstellung, Fig. 7 zeigt eine Ausführungsvariante des Gebäudes mit einem Windbeschleuniger im Giebelbereich in isometrischer Darstellung, Fig. 8 zeigt die Gebäudevariante mit Windbeschleuniger und dem Verlauf der Strömungslinien, Fig. 9 zeigt eine Ausführungsvariante des Cyclogyro-Rotors in horizontaler Achsenausrichtung als Windkraftanlage in Kombination mit einem Photovoltäik- bzw. Solarpanel, Fig. 10 zeigt eine horizontale Ausführungsvariante des Cyclogyro-Rotors als Windkraftanlage integriert in die Giebelkonstruktion eines Gebäudes und kombiniet mit Photovoltaik- bzw. Solarpanelen, Fig. 11 zeigt ein Detail von Fig. 10, Fig. 12 zeigt eine Ausführungsvariante einer horizontalen Windkraftanlage auf einem Flachdach, Fig. 13 zeigt eine vertikale Ausführungsvariante des Cyclogyro-Rotors als Windkraftanlage integriert in die Giebelkonstruktion eines Gebäudes, Fig. 14 zeigt eine Detaildarstellung von Fig. 13, Fig. 15 zeigt eine Anordnung der vertikalen Ausführungsvariante als Windkraftanlage mit Schutzeinhausung auf einem Gebäude mit Flachdach, Fig. 16 zeigt eine Ausführungsvariante des Cyclogyro-Rotors als Wasserkraftanlage in Frontansicht, Fig. 17 zeigt dieselbe Ausführungsvariante des Cyclogyro-Rotors als Wasserkraftanlage in Schnittansicht, Fig. 18 zeigt die Ausführungsvariante des Cyclogyro-Rotors als Wasserkraftanlage in isometrischer Ansicht.

Fig. 1 zeigt eine bevorzugte Ausführungsvariante eines erfindungsgemäßen Cyclogyro-Rotors in einem ersten Betriebsmodus in isometrischer Darstellung bestehend aus mehreren, vorzugsweise sechs in Seitenscheiben 3 schwenkbar in Schwenklagern 4 gelagerten Rotorblättern 1, einer Drehachse 2, einer Welle 2', Verstellstangen 5 für die zyklische Rotorblattverstellung über Kulissen 5a, einem zentralem Offset 7 für die Vorgabe der Richtung und Größe der Rotorblattanstellung und einer zentraler Rotorlagerung 6. Die Welle 2' und die Seitenscheiben 3 bilden den Rotorkörper.

Fig. 2 zeigt die Ausführungsvariante von Fig. 1 in Strömungsrichtung und Fig. 3 zeigt die Ausführungsvariante von Fig. 1 und Fig. 2 in Seitenansicht.

Fig. 4 zeigt die bevorzugte Ausführungsvariante des Cyclogyro-Rotors in Schnittansicht gemäß Schnittlinie B - B von Fig. 2 in dem ersten Betriebsmodus. Das Strömungsmedium Luft bzw. Wasser, das in Richtung 9 auf den Cyclogyro-Rotor trifft, versetzt den Rotor in eine Drehbewegung in Richtung 8. Die Geometrie des Rotorblattes 3 ist ein vollsymmetrisches geschlossenes Profil, das optimal für höhere Strömungsgeschwindigkeiten ausgebildet ist. Die einzelnen Rotorblätter 1 sind um eine Hauptschwenkachse 1a verschwenkt, um ein optimales Drehmoment zu generieren.

Fig. 5 zeigt die obige Ausführungsvariante des Cyclogyro-Rotors in einer Schnittansicht analog zu Fig. 4, in einem zweiten Betriebsmodus. Das Strömungsmedium Luft bzw. Wasser, das in Richtung 9 auf den Cyclogyro-Rotor trifft, versetzt den Rotor in eine Drehbewegung in Richtung des Pfeils 8. Die Geometrie des Rotorblattes 1 ist ein vollsymmetrisches Profil, das aus zwei Abschnitten 1', 1" besteht, die im vorlaufenden Strömungsbereich zur Erhöhung des Strömungswiderstandes entlang der weiteren Schwenkachse 1b aufgeklappt werden können und die im rücklaufenden Strömungsbereich geschlossen werden, was optimal für niedrige Strömungsgeschwindigkeiten ist. Auf diese Weise wird der Rotor bereits bei niedrigen Strömungsgeschwindigkeiten in Rotation versetzt, was niedrigere Anlauf- bzw. Kopplungsgeschwindigkeit ermöglicht.

Eine Fliehkraftkupplung, die hier nicht im Detail dargestellt ist, bewikt über eine mechanische Kopplung 1'" und 5' das zyklische Öffnen und Schließen der Abschnitte 1' und 1".

Fig. 6 zeigt die Ausführungsvariante des Cyclogyro-Rotors von Fig. 5 in isometrischer Ansicht.

Fig. 7 zeigt eine Windkraftanlage mit einem Windbeschleuniger 10 auf einer Dachkonstruktion 11 eines Gebäudes im Bereich des Dachfirsts 11a.

Fig. 8 zeigt die Wirkung des Windbeschleunigers 10 auf einer Dachkonstruktion 11 eines Gebäudes anhand von Strömungslinien 12. Im Bereich des höchsten Bereiches des Gebäudes (Dachfirst 11a) entsteht eine Strömungskonzentration und eine Zunahme der Windgeschwindigkeit.

Fig. 9 zeigt eine weitere Ausführungsvariante einer horizontal ausgerichteten Windkraftanlage mit Rotoren 13' die mit Photovoltaik- bzw. Solarpaneelen 13 kombiniert werden und Bestandteil des Windbeschleunigers sind.

Fig. 10 zeigt eine weitere bevorzugte Ausführungsvariante einer horizontal ausgerichteten Windkraftanlage mit Rotoren 13' integriert in die Dachkonstruktion 11 eines Gebäudes und kombiniert mit Photovoltaik- bzw. Solarpaneelen 13.

Fig. 11 zeigt eine Detaildarstellung (A) aus Fig. 10 einer horizontal ausgerichteten Windkraftanlage 13' mit einer Schutzvorrichtung 14 gegen unbeabsichtigte Berührung der bewegten Teile durch Personen bzw. fliegende Vögel und als Schutz der bewegten Teile der Windkraftanlage gegen herumfliegende Gegenstände.

Fig. 12 zeigt eine weitere bevorzugte Ausführungsvariante von horizontal ausgerichteten Windkraftanlagen mit Rotoren 13' aufgestellt auf Flachdächern 11' von Gebäuden. Besonders in der Nähe von Gebäudekanten 11" herrschen beschleunigte Windgeschwindigkeiten vor, die bei einer entsprechenden Anordnung der Windkraftanlagen mit Rotoren 13' optimal ausgenutzt werden können.

Fig. 13 zeigt eine weitere bevorzugte Ausführungsvariante einer Windkraftanlage 13" ausgeführt als vertikal ausgerichtete Anlage, integriert in die Giebelkonstruktion eines Gebäudedaches 11. Bei dieser Ausführungsvariante ist die Leistung der Windkraftanlage nahezu unabhängig von der Richtung des einströmenden Windes.

Fig. 14 zeigt eine Detaildarstellung (B) aus Fig. 13 der vertikal ausgerichteten Windkraftanlage mit Rotoren 13" mit einer Schutzvorrichtung 14 gegen unbeabsichtigte Berührung der bewegten Teile durch Personen bzw. fliegende Vögel und als Schutz der bewegten Teile der Windkraftanlage gegen herumfliegende Gegenstände.

Fig. 15 zeigt eine weitere bevorzugte Ausführungsvariante einer vertikal ausgerichteten Windkraftanlage mit Rotoren 13" aufgestellt auf einer Flachdachkonstruktion von Gebäuden.

Fig. 16 zeigt eine bevorzugte Ausführungsvariante einer Wasserkraftanlage, bestehend aus dem Cyclogyro-Rotor integriert in eine Strömungsvorrichtung 15, 16 in Frontansicht.

Fig. 17 zeigt eine bevorzugte Ausführungsvariante einer Wasserkraftanlage, bestehend aus dem Cyclogyro-Rotor integriert in eine Strömungsvorrichtung 15, 16 in Schnittdarstellung gem. Schnittlinie A - A von Fig. 16, der Cyclogyro-Rotor wir von einer Wasserströmung 17 angeströmt und befindet sich unterhalb der Wasseroberfläche 18 in der Strömung 18'.

Fig. 18 zeigt eine bevorzugte Ausführungsvariante einer Wasserkraftanlage, bestehend aus dem Cyclogyro-Rotor integriert in eine Strömungsvorrichtung 15, 16 in isometrischer Darstellung.

## Patentansprüche

1. Strömungsmaschine, mit einem im Wesentlichen zylindrischen Rotor (13', 13") mit einem Rotorkörper (2', 3) und einer Drehachse (2), wobei der Rotor dazu ausgebildet ist, in einer Richtung senkrecht zur Drehachse (2) durchströmt zu werden, mit mehreren parallel zu der Drehachse (2) im Rotorkörper (2', 3) angeordneten Rotorblättern (1) und mit einer Verstelleinrichtung zur zyklischen Verstellung der Rotorblätter (1), die aus zwei um eine zur Drehachse (2) parallele Schwenkachse (1a, 1b) verschwenkbaren Abschnitten (1', 1") bestehen, **dadurch gekennzeichnet, dass** die Verstelleinrichtung einen ersten Betriebsmodus aufweist, in dem die Rotorblätter (1) als Ganzes zyklisch verschwenkt werden, sowie einen zweiten Betriebsmodus, in dem die jeweiligen Abschnitte (1', 1") der einzelnen Rotorblätter (1) zyklisch gegeneinander verschwenkt werden.

2. Strömungsmaschine nach Anspruch 1, **dadurch gekennzeichnet, dass** die Rotorblätter (1) als Flügelprofile ausgebildet sind, die in Längsrichtung geteilt sind, um die verschwenkbaren Abschnitte (1', 1") zu bilden.

3. Strömungsmaschine nach Anspruch 2, **dadurch gekennzeichnet, dass** die Rotorblätter eine Profilnase aufweisen und dass die weitere Schwenkachse (1b) der verschwenkbaren Abschnitte (1', 1") in der Profilnase angeordnet ist.

4. Strömungsmaschine nach Anspruch 2 oder 3, **dadurch gekennzeichnet, dass** die Flügelprofile der Rotorblätter (1) symmetrisch ausgebildet sind und die Teilung der Rotorblätter (1) in der Symmetrieachse vorgesehen ist, so dass die verschwenkbaren Abschnitte (1', 1") zueinander symmetrisch sind.

5. Strömungsmaschine nach einem der Ansprüche 1 bis 4, **dadurch gekennzeichnet, dass** die verschwenkbaren Abschnitte (1', 1") von einer ersten Stellung, in der sie kompakt aneinander liegen, in eine zweite Stellung bringbar sind, in der sie eine Schaufel bilden.

6. Strömungsmaschine nach einem der Ansprüche 1 bis 5, **dadurch gekennzeichnet, dass** der Schwenkwinkel der Abschnitte (1', 1") gegeneinander mindestens 90°, vorzugsweise zwischen 135° und 180° beträgt.

7. Strömungsmaschine nach einem der Ansprüche 1 bis 6, **dadurch-gekenn**zeichnet, dass ein Strömungsleitgehäuse vorgesehen ist, das stromaufwärts des Rotors (13', 13") einen Anströmtrichter und stromabwärts des Rotors (13', 13") einen Diffusor aufweist.

8. Strömungsmaschine nach einem der Ansprüche 1 bis 7, **dadurch gekennzeichnet, dass** eine Fliehkraftverstellvorrichtung vorgesehen ist, die oberhalb einer vorbestimmten Drehzahl des Rotors (13', 13") in den ersten Betriebsmodus und unterhalb der vorbestimmten Drehzahl des Rotors (13', 13") in den zweiten Betriebsmodus schaltet.

9. Strömungsmaschine nach einem der Ansprüche 1 bis 8, **dadurch gekennzeichnet, dass** die Verstelleinrichtung dazu ausgebildet ist, einerseits die Rotorblätter (1) als Ganzes zyklisch zu verschwenken und andererseits gleichzeitig die Abschnitte (1', 1") der Rotorblätter (1) zyklisch zu verschwenken.

10. Windkraftanlage mit mindestens einer Strömungsmaschine nach einem der Ansprüche 1 bis 9, die auf dem Dach eines Gebäudes angeordnet ist, **dadurch gekennzeichnet, dass** mindestens ein vorzugsweise im Bereich des Dachfirstes (11a) des Gebäudes angeordneter Rotor (13', 13") mit einer zu dem Dachfirst (11a) parallelen Achse vorgesehen ist.

11. Windkraftanlage nach Anspruch 10, **dadurch gekennzeichnet, dass** der Rotor (13', 13") unmittelbar oberhalb einer Solaranlage angeordnet ist.

12. Windkraftanlage mit mindestens einer Strömungsmaschine nach einem der Ansprüche 1 bis 9, **dadurch gekennzeichnet, dass** mindestens ein Rotor (13") mit einer vertikalen Achse vorgesehen ist.

13. Verfahren zum Betrieb einer Strömungsmaschine, bei dem ein im Wesentlichen zylindrischer Rotor (13', 13") mit einem Rotorkörper (2', 3) und einer Drehachse (2) quer zur Drehachse (2) angeströmt und durchströmt wird, wobei mehrere parallel zu der Drehachse (2) im Rotorkörper angeordnete Rotorblätter (1) durch eine Verstelleinrichtung zyklisch verstellt werden, wobei die Verstellung zumindest teilweise durch zyklisches Auf- und Zuklappen von zwei die Rotorblätter (1) bildenden Abschnitten (1', 1") erfolgt, **dadurch gekennzeichnet, dass** in einem ersten Betriebsmodus die Rotorblätter (1) als Ganzes zyklisch verschwenkt werden, und in einem zweiten Betriebsmodus die jeweiligen Abschnitte (1', 1") der einzelnen Rotorblätter (1) zyklisch gegeneinander verschwenkt werden und dass vorzugsweise der erste Betriebsmodus bei Anströmgeschwindigkeiten oberhalb eines vorbestimmten Grenzwerts und der zweite Betriebsmodus bei Anströmgeschwindigkeiten unterhalb eines vorbestimmten Grenzwerts gewählt wird.

14. Verfahren nach Anspruch 13, **dadurch gekennzeichnet, dass** das Umschalten zwischen dem ersten Betriebsmodus und dem zweiten Betriebsmodus in Abhängigkeit von der Rotordrehzahl erfolgt, wobei vorzugsweise der erste Betriebsmodus bei Drehzahlen oberhalb eines vorbestimmten Grenzwerts und der zweite Betriebsmodus bei Drehzahlen unterhalb eines vorbestimmten Grenzwerts gewählt wird.

15. Verfahren nach Anspruch 13, **dadurch gekennzeichnet, dass** die Rotorblätter (1) einem Kennfeld entsprechend sowohl zyklisch in ihrer Neigung verstellt werden als auch auf- und zugeklappt werden.

16. Verfahren nach einem der Ansprüche 13 bis 15, **dadurch gekennzeichnet, dass** die Rotorblätter (1) über einen Umfangswinkel aufgeklappt sind, der zwischen 90° und 170°, vorzugsweise zwischen 110° und 150° beträgt.

17. Verfahren nach einem der Ansprüche 13 bis 16, **dadurch gekennzeichnet, dass** die Energieausbeute durch Erwärmen des Strömungsmediums erhöht wird und dass die Erwärmung vorzugsweise dadurch erfolgt, dass die anströmende Luft über eine Solaranlage (13) geführt wird.

## Claims

1. A turbomachine, comprising a substantially cylindrical rotor (13', 13") with a rotor body (2', 3) and a rotational axis (2), wherein the rotor is designed to be permeated in a direction perpendicularly to the rotational axis (2), and also comprising several rotor blades (1) which are arranged in the rotor body (2', 3) parallel to the rotational axis (2) and an adjusting device for cyclically adjusting the rotor blades (1), which consist of two sections (1', 1") which can be pivoted about a pivot axis (1a, 1b) which is parallel to the rotational axis (2), **characterised in that** the adjusting device has a first operating mode in which the rotor blades (1) are cyclically pivoted in their entirety, and a second operating mode in which the respective sections (1', 1") of the individual rotor blades (1) are pivoted cyclically against each other.

2. A turbomachine according to claim 1, **characterised in that** the rotor blades (1) are arranged as wing profiles which are divided in the longitudinal direction in order to form the pivotable sections (1', 1").

3. A turbomachine according to claim 2, **characterised in that** the rotor blades comprise a profile nose and the further pivot axis (1b) of the pivotable sections (1', 1") are arranged in the profile nose.

4. A turbomachine according to claim 2 or 3, **characterised in that** the wing profiles of the rotor blades (1) are arranged symmetrically and the division of the rotor blades (1) is provided in the axis of symmetry, so that the pivotable sections (1', 1") are symmetric with respect to each other.

5. A turbomachine according to one of the claims 1 to 4, **characterised in that** the pivotable sections (1', 1") can be brought from a first position in which they rest in a compact fashion on each other to a second position in which they form a blade.

6. A turbomachine according to one of the claims 1 to 5, **characterised in that** the pivot angle of the sections (1', 1") is at least 90° with respect to each other, preferably between 135° and 180°.

7. A turbomachine according to one of the claims 1 to 6, **characterised in that** a flow guide housing is provided which comprises an inflow funnel upstream of the rotor (13', 13") and a diffuser downstream of the rotor (13', 13").

8. A turbomachine according to one of the claims 1 to 7, **characterised in that** a centrifugal-force adjusting apparatus is provided, which switches to the first operating mode above a predetermined speed of the rotor (13', 13") and switches to the second operating mode beneath the predetermined speed of the rotor (13', 13").

9. A turbomachine according to one of the claims 1 to 8, **characterised in that** the adjusting device is arranged to cyclically pivot the rotor blades (1) in their entirety on the one hand and to simultaneously cyclically pivot the sections (1', 1") of the rotor blades (1) on the other hand.

10. A wind power plant with at least one turbomachine according to one of the claims 1 to 9, which is arranged on the roof of a building, **characterised in that** at least one rotor (13', 13") is provided, which is preferably arranged in the region of the ridge (11a) on the roof of the building and has an axis which is parallel to the ridge (11a) of the roof.

11. A wind power plant according to claim 10, **characterised in that** the rotor (13', 13") is arranged directly above a solar power plant.

12. A wind power plant with at least one turbomachine according to one of the claims 1 to 9, **characterised in that** at least one rotor (13") with a vertical axis is provided.

13. A method for operating a turbomachine, wherein a flow flows towards and permeates a substantially cylindrical rotor (13', 13") with a rotor body (2', 3) and a rotational axis (2) transversely to the rotational axis (2), wherein several rotor blades (1) arranged parallel to the rotational axis (2) in the rotor body are cyclically adjusted by an adjusting device, wherein the adjustment occurs at least partly by cyclic folding up and folding down of two sections (1', 1") which form the rotor blades (1), **characterised in that** the rotor blades (1) are pivoted cyclically in their entirety in a first operating mode and the respective sections (1', 1") of the individual rotor blades (1) are pivoted cyclically against each other in a second operating mode, and preferably the first operating mode is chosen at inflow velocities above a predetermined threshold value and the second operating mode at inflow velocities beneath a predetermined threshold value.

14. A method according to claim 13, **characterised in that** the changeover between the first operating mode and the second operating mode occurs as a function of the rotor speed, wherein preferably the first operating mode is chosen at rotational speeds above a predetermined threshold value and the second operating mode at rotational speeds beneath a predetermined threshold value.

15. A method according to claim 13, **characterised in that** the rotor blades (1) are both cyclically adjusted in their inclination and also folded up and down according to a characteristic map.

16. A method according to one of the claims 13 to 15, **characterised in that** the rotor blades (1) are folded up over an angle at circumference which is between 90° and 170°, preferably between 110° and 150°.

17. A method according to one of the claims 13 to 16, **characterised in that** the energy yield is increased by heating the flow medium, and the heating preferably occurs in such a way that the incoming air is guided over a solar power plant (13).

## Revendications

1. Turbomachine comportant un rotor (13', 13") essentiellement cylindrique comprenant un corps de rotor (2', 3) et un axe de rotation (2), ce rotor étant réalisé de façon à pouvoir être traversé dans une direction perpendiculaire à l'axe de rotation (2), plusieurs pales de rotor (1) situés parallèlement à l'axe de rotation (2) dans le corps de rotor (2', 3') et une unité de réglage pour permettre un réglage cyclique des pales de rotor (1) qui consistent en deux segments (1', 1 ") pouvant pivoter autour d'un axe de pivotement (1a, 1b) parallèle à l'axe de rotation (2),
**caractérisé en ce que**
le dispositif de réglage comporte un premier mode de fonctionnement dans lequel les pales de rotor (1) sont pivotées cycliquement dans leur globalité ainsi qu'un second mode de fonctionnement dans lequel les segments parallèles (1', 1 ") des différentes pales de rotor (1) sont basculés cycliquement l'un par rapport à l'autre.

2. Turbomachine conforme à la revendication 1,
**caractérisé en ce que**
les pales de rotor (1) sont réalisées sous la forme de profils d'ailes qui sont subdivisés dans la direction longitudinale pour former les segments pivotant (1', 1").

3. Turbomachine conforme à la revendication 2,
**caractérisé en ce que**
les pales de rotor comportent un bec de profil et l'autre axe de pivotement (1b) des segments pivotant (1', 1") est positionné dans ce bec de profil.

4. Turbomachine conforme à la revendication 2 ou 3,
**caractérisé en ce que**
les profils d'ailes des pales de rotor (1) sont réalisées symétriquement et la subdivision des pales de rotor (1) est prévue selon l'axe de symétrie de sorte que les segments pivotants (1', 1 ") soient symétriques l'un par rapport à l'autre.

5. Turbomachine conforme à l'une des revendications 1 à 4,
**caractérisé en ce que**
les segments pivotants (1', 1") peuvent être positionnés à partir d'une première position dans laquelle ils s'appuient l'un contre l'autre de façon compacte dans une seconde position dans laquelle ils forment une aube.

6. Turbomachine conforme à l'une des revendications 1 à 5,
**caractérisé en ce que**
l'angle de pivotement des segments (1', 1 ") l'un par rapport à l'autre est d'autre moins 90° et de préférence compris entre 135° et 180°.

7. Turbomachine conforme à l'une des revendications 1 à 6,
**caractérisé en ce qu'**
il est prévu un boitier de guidage de l'écoulement qui comporte un cône de soufflage en amont du rotor (13', 13") et un diffuseur en aval du rotor (13', 13").

8. Turbomachine conforme à l'une des revendications 1 à 7,
**caractérisé en ce qu'**
il est prévu un dispositif de réglage de la force centrifuge qui effectue une commutation dans le premier mode de fonctionnement au-dessus d'une vitesse de rotation prédéfinie du rotor (13', 13") et dans le second mode de fonctionnement au-dessous de la vitesse de rotation prédéfinie du rotor (13', 13").

9. Turbomachine conforme à l'une des revendications 1 à 8,
**caractérisé en ce que**
le dispositif de réglage est réalisé pour d'une part permettre de faire pivoter cycliquement les pales de rotor (1) dans leur globalité et d'autre part pour permettre de faire pivoter cycliquement simultanément les segments (1', 1 ") des pales de rotor (1).

10. Installation d'éolienne comprenant au moins une turbomachine conforme à l'une des revendications 1 à 9, qui est montée sur le toit d'un bâtiment,
**caractérisée en ce qu'**
au moins un rotor (13', 13") de préférence monté dans la zone du faîte du toit (11a) du bâtiment est équipé d'un axe parallèle au faîte du toit (11a).

11. Installation d'éolienne conforme à la revendication 10,
**caractérisée en ce que**
le rotor (13', 13") est monté directement au-dessus d'une installation solaire.

12. Installation d'éolienne comportant au moins une turbomachine conforme à l'une des revendications 1 à 9,
**caractérisée en ce qu'**
au moins un rotor (13") est équipé d'un axe vertical.

13. Procédé de gestion d'une turbomachine dans laquelle un rotor (13', 13") essentiellement cylindrique ayant un corps de rotor (2', 3) et un axe de rotation (2) est balayé et parcouru transversalement à l'axe de rotation (2), plusieurs pales de rotor (1) montées dans le corps de rotor parallèlement à l'axe de rotation (2) étant réglées cycliquement par un dispositif de réglage, ce réglage étant effectué au moins partiellement par déploiement et repliement cyclique de deux segments (1', 1 ") formant les pales de rotor (1),
**caractérisé en ce que**
dans un premier mode de fonctionnement les pales de rotor (1) sont pivotées cycliquement dans leur globalité et dans un second mode de fonctionnement les segments (1', 1 ") respectifs des différentes pales de rotor (1) sont pivotés cycliquement l'un par rapport à l'autre, et, de pré-férence, le premier mode de fonctionnement est sélectionné pour des vitesses d'écoulement situées au-dessus d'une vitesse limite prédéfinie, et le second mode de fonctionnement est choisi pour des vitesses d'écoulement situées au-dessous d'une valeur limite prédéfinie.

14. Procédé conforme à la revendication 13,
**caractérisé en ce que**
la commutation entre le premier mode de fonctionnement et le second mode de fonctionnement est effectuée en fonction de la vitesse de rotation du rotor, et, de préférence, le premier mode de fonctionnement est choisi pour des vitesses de rotation situées au-dessus d'une valeur limite prédéfinie tandis que le second mode de fonctionnement est choisi pour des vitesses de rotation situées au-dessous d'une valeur limite prédéfinie.

15. Procédé conforme à la revendication 13,
**caractérisé en ce que**
l'inclinaison des pales de rotor (1) est réglée cycliquement et ces pales sont également déployées et repliées conformément à un champs caractéristique.

16. Procédé conforme à l'une des revendications 13 à 15,
**caractérisé en ce que**
les pales de rotor (1) sont déployées sur un angle inscrit qui est compris entre 90° et 170°, de préférence entre 110° et 150°.

17. Procédé conforme à l'une des revendications 13 à 16,
**caractérisé en ce que**
le rendement énergétique est augmenté par chauffage du fluide en écoulement, et, le réchauffement est de préférence effectué de sorte que l'air en écoulement soit transféré sur une installation solaire (13).
